# FASCICULE DE BREVET EUROPEEN

(11) **EP 3 645 227 B1**
(45) Date de publication et mention de la délivrance du brevet: **23.03.2022**
(21) Numéro de dépôt: 18737685.0
(22) Date de dépôt: 19.06.2018
(51) Int. Cl.: B26D 5/00, G01B 11/04

(54) **PROCÉDÉ DE DÉTERMINATION D'UNE DIMENSION ENTRE LE DOS ET LE FIL TRANCHANT D'UNE LAME VIBRANTE MONTÉE SUR UN OUTIL DE COUPE**
VERFAHREN ZUR BESTIMMUNG EINER ABMESSUNG ZWISCHEN DEM SCHNITTRÜCKEN UND DER SCHNEIDE EINER AUF EINEM SCHNEIDWERKZEUG MONTIERTEN VIBRIERENDEN KLINGE
METHOD FOR DETERMINING A DIMENSION BETWEEN THE BACK AND THE CUTTING EDGE OF A VIBRATING BLADE MOUNTED ON A CUTTING TOOL

(30) Priorité: 30.06.2017 FR 1756126
(43) Date de publication de la demande: 06.05.2020
(73) Titulaire: Lectra, 75016 Paris (FR)
(72) Inventeur: CHABIRAND, Didier, 33610 Cestas (FR); LALLEMENT, Régis Pierre André, 33610 Cestas (FR)
(74) Mandataire: Cabinet Beau de Loménie
(86) Numéro de dépôt international: PCT/FR2018/051461
(87) Numéro de publication internationale: WO 2019/002719

(56) Documents cités:
- FR-A1- 2 709 177
- JP-B2- 5 344 918
- US-A- 5 768 154
- US-A1- 2012 229 621

## Description

### Arrière-plan de l'invention

La présente invention se rapporte au domaine général de la découpe automatique par une lame vibrante d'une matière souple placée sur une table de coupe sous forme d'un pli unique ou d'un empilement de plis.

Un domaine d'application de l'invention est celui de la découpe automatique de pièces dans une matière souple textile ou non textile (comme le cuir), en particulier dans l'industrie de la confection, de l'ameublement ou de la sellerie automobile.

Un procédé connu pour la découpe automatique de pièces dans une matière souple consiste à amener la matière sur un support de coupe fixe ou mobile de la table de coupe, sous la forme d'un pli unique ou d'un empilement de plis formant un matelas, et à découper les pièces au moyen d'une tête de coupe se déplaçant au-dessus du support de coupe de la table. La tête de coupe porte notamment une lame vibrante en acier qui est mise en vibration verticalement selon le sens de son fil tranchant afin de découper la matière.

Le profil de la lame de coupe, et notamment la position de son fil tranchant, évolue régulièrement au cours de son utilisation et en fonction des affûtages successifs qui sont réalisés. La connaissance précise du profil du fil tranchant de la lame au cours de son évolution est une information nécessaire pour permettre de correctement paramétrer les découpes successives des pièces de sorte à ce que celles-ci restent conformes aux attentes dans la durée.

A cet effet, il est courant d'utiliser un plan d'usure du fil tranchant de la lame et un plan de compensation de l'usure de l'abrasif utilisé pour l'affûtage de la lame (correspondant à la variation de pression pendant la durée de vie de la bande d'abrasif ou des meules d'affûtage), le plan de compensation de l'usure de l'abrasif étant fonction de la nature de la lame et des conditions d'affûtage et de la nature de l'abrasif. Ces informations sont prises en compte pour mettre à jour les paramètres de la tête de coupe, notamment pour modifier les trajectoires de coupe.

Ce procédé de contrôle de la dimension entre le dos et le fil tranchant de la lame vibrante présente cependant un certain nombre d'inconvénients. Un écart dimensionnel initial entre la dimension théorique entre le dos et le fil tranchant de la lame et la dimension réelle de celui-ci est généralement constaté. Or, cet écart est continuellement utilisé, ce qui fausse les informations obtenues. De plus, la variabilité des paramètres d'affûtage peut entraîner une dérive entre le plan d'usure du fil tranchant et la réalité de cette usure, ce qui nécessite de devoir régulièrement mesurer de façon manuelle les dimensions de la lame et de les réintégrer dans les données de traitement des trajectoires de coupe. En outre, la prise en compte des tolérances de fabrication (dimensionnelles, géométriques et métallurgiques) génèrent des écarts.

On connaît du document US 2015/0082957 un dispositif de mesure comprenant un capteur monté sur le pied de biche de la tête de coupe et qui permet de mesurer par l'intermédiaire d'un capteur de proximité le déplacement de l'extrémité du fil tranchant de la lame due aux affûtages répétés. Ce procédé de mesure présente cependant des inconvénients notamment du fait de son manque de précision, la mesure de l'usure du fil tranchant de la lame étant simplement ponctuelle.

On connaît également du document FR 2,709,177 un dispositif de mesure de la lame par contact, ce dispositif étant monté sur la tête de coupe. La mesure est réalisée ici par palpage et par contact mécanique avec l'extrémité du fil tranchant de la lame. Outre les inconvénients liés au manque de précision d'une mesure ponctuelle, ce procédé de mesure nécessite la mise en œuvre de moyens mécaniques pouvant détériorer par contact le fil tranchant de la lame.

Le document US 5,768,154 décrit un procédé pour mesurer la largeur de bandes de métal en prenant une image numérique de celles-ci. Le document US 2012/229621 décrit des moyens lasers pour mesurer différentes propriétés géométriques d'un objet telles que l'épaisseur, la planéité, l'orientation de surface, etc. Le document JP 5 344918 décrit un outil de coupe 3D d'une matière au moyen d'une lame de coupe vibrante muni d'un détecteur optique de proximité pour déterminer l'état de la lame.

### Objet et résumé de l'invention

La présente invention a donc pour but principal de proposer un procédé de détermination d'une dimension entre le dos et le fil tranchant d'une lame vibrante qui ne présente pas les inconvénients précités.

Conformément à l'invention, ce but est atteint grâce à un procédé de détermination d'une dimension entre le dos et le fil tranchant d'une lame vibrante montée sur une tête de coupe et apte à être mise en vibration selon une direction verticale pour découper une matière souple, comprenant successivement :
acquérir une image numérique de la lame montée sur l'outil de coupe de façon à ce qu'une ligne correspondant à un tranchant de la lame et une ligne correspondant à un dos de la lame soient visibles sur l'image ;
déterminer sur l'image numérique le long d'une droite perpendiculaire à la ligne correspondant au tranchant de la lame le nombre de pixels compris entre la ligne correspondant au tranchant de la lame et la ligne correspondant au dos de la lame ; et
calculer une dimension filtrée entre le dos et le fil tranchant de la lame à partir du nombre de pixels compris entre la ligne correspondant au tranchant de la lame et la ligne correspondant au dos de la lame.

Le procédé selon l'invention présente de nombreux avantages. En particulier, de par le traitement d'image appliqué à l'image acquise d'une plage du fil tranchant de la lame, le procédé selon l'invention permet de déterminer, non pas une dimension ponctuelle entre le dos et le fil tranchant de la lame, mais une dimension filtrée entre le dos et le fil tranchant. Comme l'usure du fil tranchant n'est pas homogène sur toute la hauteur de la lame, la détermination d'une dimension filtrée du fil tranchant permet l'obtention d'un résultat plus précis et proche de la réalité. De plus, le procédé selon l'invention est sans contact mécanique avec la lame, ce qui évite tout risque de détérioration du fil tranchant lors de la mesure. Par ailleurs, la connaissance du profil du fil tranchant de la lame vibrante permet de vérifier si celui-ci reste dans une plage compatible avec la qualité de coupe à atteindre. Enfin, la réalisation d'une image numérique du profil du fil tranchant permet de détecter un éventuel défaut de réglage ou d'usure de l'outil d'affûtage.

De préférence, l'étape consistant à prendre une image numérisée de la lame est réalisée en mettant en vibration la lame à une fréquence de vibration pouvant aller jusqu'à la fréquence maximale de vibration autorisée sur la machine de coupe. La mise en vibration de la lame permet de réaliser un lissage de l'image acquise et permet de prendre en compte une plage du fil tranchant de la lame plus grande le long de son axe de vibration.

De préférence également, la mise en vibration de la lame est réalisée à une amplitude de vibration comprise entre 0,5 mm et 30 mm. Cette amplitude de vibration est à comparer à une hauteur totale du fil tranchant, comprise dans une fourchette de 1 à 150 mm, par exemple de l'ordre de 130 mm, et permet d'obtenir une dimension moyenne du fil tranchant significative.

Alternativement, l'étape consistant à prendre une image numérisée de la lame peut être réalisée avec la lame en position statique. Dans ce mode de réalisation, le filtrage de l'image acquise peut être appliqué à l'image par un traitement numérique adéquat.

De préférence encore, le procédé comprend en outre, préalablement à l'étape consistant à prendre une image numérisée de la lame, une étape d'étalonnage consistant à prendre une image numérisée d'une lame étalon montée sur la tête de coupe, ladite lame étalon ayant une dimension connue entre le dos et le fil tranchant.

Le procédé peut comprendre en outre l'utilisation de la dimension entre le dos et le fil tranchant de la lame pour mettre à jour les données de la tête de coupe. Les données de la tête de coupe comprennent notamment les trajectoires de coupe qui sont corrigées en fonction de la dimension obtenue pour le fil tranchant.

L'étape consistant à prendre une image numérisée de la lame peut être réalisée à l'aide d'une caméra numérique montée sur la tête de coupe en regard de la lame. Ainsi, la détermination filtrée de la dimension entre le dos et le fil tranchant ne nécessite aucune manipulation particulière de la lame montée sur la tête de coupe.

La caméra peut comprendre un capteur numérique ayant une résolution de 2592 par 1944 pixels et une vitesse d'acquisition de 15 images par seconde.

L'invention a également pour objet un dispositif de détermination d'une dimension entre le dos et le fil tranchant d'une lame vibrante montée sur une tête de coupe et apte à être mise en vibration selon une direction verticale pour découper une matière souple, le dispositif comprenant des moyens de mise en vibration de la lame selon une direction verticale, des moyens d'acquisition d'une image numérique de la lame, et des moyens de calcul d'une dimension filtrée entre le dos et le fil tranchant de la lame à partir d'un nombre de pixels compris le long d'une droite perpendiculaire à une ligne correspondant au tranchant de la lame entre la ligne correspondant au tranchant de la lame et une ligne correspondant au dos de la lame.

De préférence, le dispositif comprend en outre des moyens d'éclairage du fil tranchant de la lame.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique représentant une tête de coupe équipée d'un dispositif de détermination d'une dimension entre le dos et le fil tranchant d'une lame vibrante selon l'invention ; et
- la figure 2 est une vue schématique représentant un exemple de mise en œuvre du procédé de détermination d'une dimension entre le dos et le fil tranchant d'une lame vibrante selon l'invention.

### Description détaillée de l'invention

L'invention s'applique à la découpe automatisée de pièces dans une matière souple se présentant sous la forme d'un pli unique ou d'un empilement de plis.

Une telle opération de découpe est généralement réalisée au moyen d'une machine de coupe munie d'un support horizontal de coupe sur lequel est amenée la matière souple à découper.

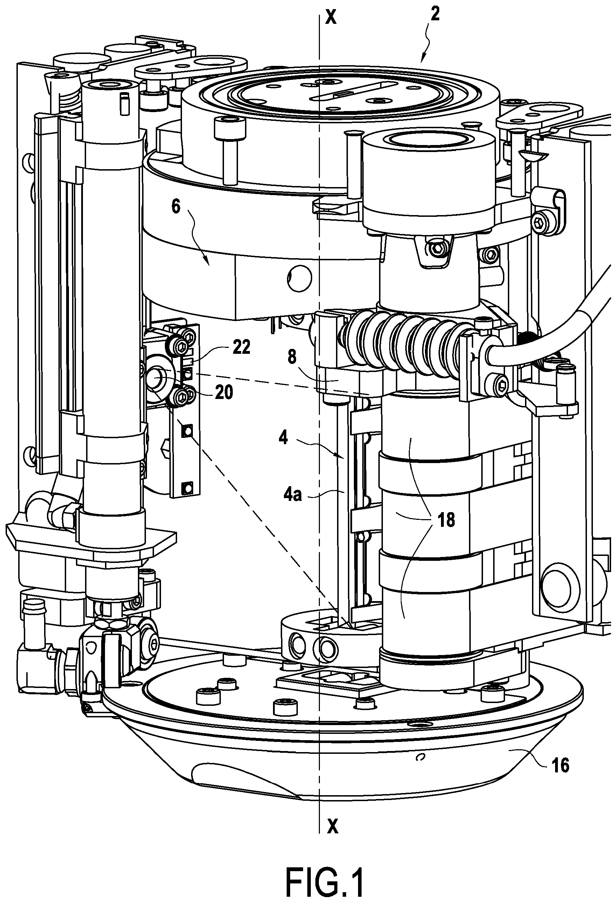

La machine de coupe comprend également un portique sur lequel est montée une tête de coupe, telle que la tête de coupe 2 partiellement représentée sur la figure 1. Typiquement, cette tête de coupe comprend notamment une lame vibrante 4 et peut comprendre un ou plusieurs outils secondaires de coupe (par exemple des perceuses).

Un logiciel de coupe détermine les différentes trajectoires de coupe de la matière souple. Sous le contrôle d'un poste de travail, le portique de la machine de coupe se déplace le long du support de coupe, tandis que la tête de coupe peut se déplacer simultanément le long du portique de sorte à pouvoir suivre les différentes trajectoires de coupe calculées par le logiciel de coupe.

De façon connue, la tête de coupe 2 comprend un bâti 6 qui est monté sur le portique de la machine de coupe, ce bâti supportant la lame vibrante 4. Plus précisément, la tête de coupe comprend un porte-outil 8 à l'extrémité duquel est montée la lame vibrante 4, cette dernière étant montée verticalement.

De façon connue, la tête de coupe 2 comprend également un moteur de pivotement de la lame (non représenté sur les figures) permettant de pivoter la lame vibrante 4 autour de son axe vertical X-X afin de suivre les trajectoires de coupe préétablies, ainsi qu'un moteur de mise en vibration de la lame (non représenté sur les figures) permettant de mettre en vibration la lame (selon une direction parallèle à son axe vertical).

A titre indicatif, pour une lame vibrante 4 de 300 mm de long, la mise en vibration de celle-ci s'effectue sur une amplitude verticale de 25 mm et à une fréquence de vibration de 100 Hz au maximum.

La tête de coupe 2 comprend encore un mécanisme à deux vérins (non représentés sur les figures) permettant de déplacer verticalement la lame vibrante 4 entre une position abaissée de travail et une position relevée (la lame est en position relevée sur la figure 1).

Un pied presseur 16 est monté sur la partie basse du bâti 6 de la tête de coupe afin de plaquer la matière souple sur son support de coupe pendant la coupe, la hauteur de ce pied presseur étant réglable en fonction de la hauteur de matière souple posée sur le support de coupe.

Le porte-outil 8 est équipé de moyens d'affûtage de la lame vibrante 4, et plus précisément de son fil tranchant 4a. Sur l'exemple de réalisation de la figure 1, ces moyens d'affûtage comprenant trois bandes d'abrasif 18 espacées verticalement les unes des autres et pouvant être mises en rotation par l'intermédiaire d'un moteur autour d'un axe vertical parallèle à l'axe vertical X-X de la lame vibrante.

L'affûtage du fil tranchant 4a de la lame vibrante 4 par l'intermédiaire des bandes d'abrasif, meules ou tout autre dispositif, s'effectue après un périmètre donné de découpe réalisé ou lorsqu'un angle sur le contour à découper est atteint. A cet effet, la lame vibrante est déplacée verticalement pour être amenée en position relevée et elle est pivotée autour de son axe vertical pour positionner un premier flan de son fil tranchant en regard des bandes d'abrasif, la lame est mise en vibration et les bandes d'abrasif mises en rotation sont amenées au contact de la lame pour affûter le fil tranchant sur la majeure partir de sa hauteur. Le processus est répété pour le second flan de la lame après avoir dégagé les bandes d'abrasifs du contact de la lame. La lame est pivotée de 180° pour présenter son second flan en regard des bandes d'abrasif.

Selon l'invention, un dispositif permet de déterminer de façon automatique une dimension filtrée entre le dos et le fil tranchant 4a de la lame vibrante 4, notamment après chaque opération d'affûtage ou après un nombre prédéterminé d'affûtages. Cette détermination est réalisée avec la lame vibrante montée sur la tête de coupe 2 sans nécessiter de démontage de celle-ci.

A cet effet, le dispositif de détermination d'une dimension filtrée entre le dos et le fil tranchant de la lame vibrante comprend notamment une caméra d'acquisition d'images numériques 20 qui est montée sur le bâti 6 de la tête de coupe 2 en regard de la lame vibrante 4 lorsque celle-ci est amenée en position relevée (figure 1).

La caméra d'acquisition d'images numériques 20 est par exemple une caméra munie d'un capteur numérique ayant une résolution de 2592 par 1944 pixels et une vitesse de prises de vues de 15 images par seconde.

La caméra d'acquisition d'images numériques 20 est reliée à des moyens logiciels de traitement d'images (non représentés sur les figures) connus de l'homme du métier pour réaliser un certain nombre d'opérations de calculs sur les images numériques.

Le dispositif de détermination d'une dimension filtrée entre le dos et le fil tranchant de la lame vibrante comprend également des moyens d'éclairage 22 montés sur le bâti 6 de la tête de coupe pour éclairer le fil tranchant de la lame vibrante lors de la prise de vues.

La détermination d'une dimension filtrée entre le dos et le fil tranchant de la lame vibrante est réalisée selon l'invention de la manière suivante.

Une première étape consiste à amener la lame vibrante 4 en position relevée comme cela est le cas sur la figure 1. Cette étape est mise en œuvre en activant le mécanisme à vérins de la tête de coupe. Dans cette position relevée, le fil tranchant 4a de la lame vibrante est positionné en regard de la caméra 20.

La lame vibrante est ensuite pivotée autour de son axe vertical X-X afin de positionner son fil tranchant selon une direction perpendiculaire à l'axe de la prise de vues de la caméra 20. Cette étape est mise en œuvre en activant le moteur de pivotement de la lame de la tête de coupe.

Afin de parfaitement aligner la lame vibrante avec l'axe de prise d'images de la caméra 20, il est avantageux de définir une inclinaison de référence de la lame afin de l'appliquer ensuite à toutes les prises de vues.

Dans un mode de réalisation, la lame vibrante est alors mise en vibration lente selon une direction verticale à une fréquence de vibration comprise de préférence entre 1 et 20Hz. Cette étape est mise en œuvre en activant le moteur de mise en vibration de la lame de la tête de coupe.

La mise en vibration lente de la lame vibrante permet par la suite de bénéficier d'une image numérique de la lame qui soit lissée et permet de prendre en compte une plage du fil tranchant de la lame plus grande. En d'autres termes, l'image du fil tranchant de la lame vibrante mise en vibration lente permet d'établir une enveloppe du profil des maxima du fil tranchant et une enveloppe du profil des minima du fil tranchant.

Dans un autre mode de réalisation, la lame vibrante n'est pas mise en vibration lente et reste statique pendant l'acquisition d'une image numérique. Pour obtenir une image numérique de celle-ci qui soit parfaitement nette, un traitement numérique de l'image est réalisé.

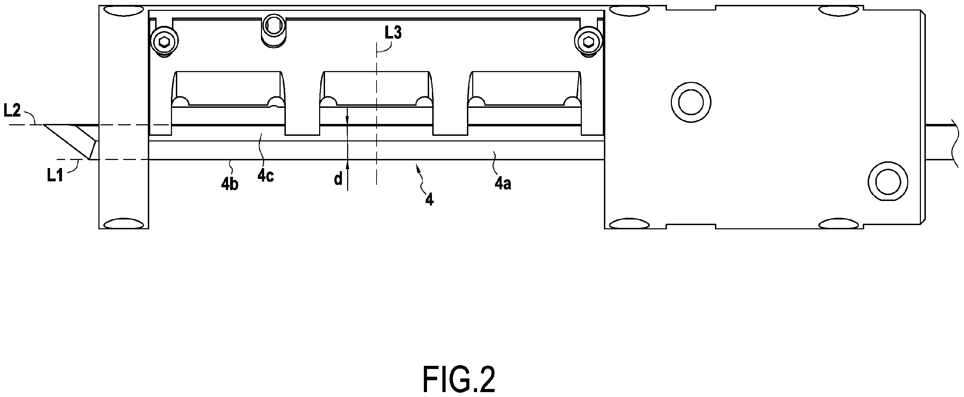

La caméra 20 permet alors d'acquérir des images numériques de la lame vibrante (mise en vibration lente ou statique). La figure 2 représente le traitement de l'une de ces images numériques 24 envoyée au logiciel de traitement d'images (pour des raisons de simplification, tous les éléments ont été retirés de l'image numérique 24 en dehors de la lame vibrante).

Il est prévu, conformément au procédé selon l'invention, de calculer sur l'image numérique 24 la dimension filtrée entre le dos et le fil tranchant de la lame, c'est-à-dire la distance d entre une première ligne L1 correspondant à un maxima de l'enveloppe du profil des maxima du fil tranchant 4b de la lame vibrante 4 et une seconde ligne L2 correspondant à un dos 4c de la lame vibrante. Pour déterminer la ligne L1, la détermination de la valeur maximale en appliquant un filtre éliminant les points particuliers pourra être utilisée.

Différentes méthodes dans le domaine du traitement d'images peuvent être utilisées pour calculer cette distance d à partir de l'image numérique 24.

Selon l'une des méthodes décrites ici, il est prévu d'extraire par seuillage les points déterminant les lignes L1 et L2, puis de déterminer la distance d entre ces lignes L1 et L2. A cet effet, le logiciel de traitement d'images détermine sur l'image numérique 24 le long d'une droite L3 perpendiculaire à la ligne L1 correspondant au tranchant de la lame le nombre de pixels compris entre les lignes L1 et L2.

A partir de la dimension connue d'un pixel, le logiciel permet alors de calculer la distance d séparant le tranchant 4b du dos 4c de la lame vibrante 4.

La détermination de la dimension filtrée entre le dos et le fil tranchant de la lame est régulièrement réalisée au cours de la durée d'utilisation de la lame (par exemple tous les 100 affûtages). Cette donnée est ensuite transférée au logiciel de pilotage de la machine de coupe pour modifier les paramètres de l'outil de coupe, et notamment les trajectoires de coupe, en fonction de l'évolution du profil du fil tranchant de la lame vibrante.

On notera qu'une étape d'étalonnage est nécessaire préalablement à la mise en œuvre du calcul de la dimension filtrée entre le dos et le fil tranchant de la lame.

Cette étape d'étalonnage consiste essentiellement à prendre une image numérisée d'une lame étalon montée sur la tête de coupe, cette lame étalon ayant une dimension connue entre le dos et le fil tranchant qui pourra ensuite être comparée à la dimension filtrée calculée à chaque mesure.

On notera également que des traitements supplémentaires peuvent être appliqués aux images numériques acquises par la caméra, notamment en fonction des conditions de prises de vue qui sont retenues (luminosité, éclairage, contraste, angles de prise de vue, etc.).

On notera encore qu'à partir de l'image du fil tranchant de la lame vibrante mise en vibration lente, on peut également déterminer la distance entre une ligne correspondant à un minima de l'enveloppe du profil des minima du fil tranchant de la lame vibrante et la ligne correspondant au dos de la lame vibrante. La détermination de cette distance permet de s'assurer que le profil d'usure de la lame reste compris dans une fourchette prédéterminée. Cette caractéristique permet ainsi :
> de confirmer le bon réglage et le bon état de fonctionnement du système d'affûtage ;
> d'alerter l'utilisateur ainsi que l'opérateur de maintenance de la nécessité de procéder à un réglage du système d'affûtage ou à un remplacement total ou partiel des éléments du système d'affûtage si cette fourchette est dépassée ; et
> d'anticiper les problèmes et de garantir ainsi un fonctionnement optimal de la machine au niveau de la coupe.

## Revendications

1. Procédé de détermination d'une dimension entre le dos et le fil tranchant (4a) d'une lame vibrante (4) montée sur une tête de coupe (2) et apte à être mise en vibration selon une direction verticale pour découper une matière souple, comprenant successivement :
acquérir une image numérique (24) de la lame montée sur l'outil de coupe de façon à ce qu'une ligne (L1) correspondant à un tranchant (4b) de la lame et une ligne (L2) correspondant à un dos (4c) de la lame soient visibles sur l'image ;
déterminer sur l'image numérique le long d'une droite (L3) perpendiculaire à la ligne correspondant au tranchant de la lame le nombre de pixels compris entre la ligne correspondant au tranchant de la lame et la ligne correspondant au dos de la lame ; et
calculer une dimension filtrée (d) entre le dos et le fil tranchant de la lame à partir du nombre de pixels compris entre la ligne correspondant au tranchant de la lame et la ligne correspondant au dos de la lame.

2. Procédé selon la revendication 1, dans lequel l'étape consistant à prendre une image numérisée de la lame est réalisée en mettant en vibration la lame à une fréquence de vibration pouvant aller jusqu'à la fréquence maximale de vibration autorisée sur la machine de coupe.

3. Procédé selon la revendication 2, dans lequel la mise en vibration de la lame est réalisée à une amplitude de vibration comprise entre 0,5 mm et 30 mm.

4. Procédé selon la revendication 1, dans lequel l'étape consistant à prendre une image numérisée de la lame est réalisée avec la lame en position statique.

5. Procédé selon l'une quelconque des revendications 1 à 4, comprenant en outre, préalablement à l'étape consistant à prendre une image numérisée de la lame, une étape d'étalonnage consistant à prendre une image numérisée d'une lame étalon montée sur la tête de coupe, ladite lame étalon ayant une dimension connue entre le dos et le fil tranchant.

6. Procédé selon l'une quelconque des revendications 1 à 5, comprenant en outre l'utilisation de la dimension entre le dos et le fil tranchant de la lame pour mettre à jour les données de la tête de coupe.

7. Procédé selon l'une quelconque des revendications 1 à 6, dans lequel l'étape consistant à prendre une image numérisée de la lame est réalisée à l'aide d'une caméra numérique (20) montée sur la tête de coupe en regard de la lame.

8. Procédé selon la revendication 7, dans lequel la caméra comprend un capteur numérique ayant une résolution de 2592 par 1944 pixels et une vitesse d'acquisition de 15 images par seconde.

9. Dispositif de détermination d'une dimension du fil tranchant (4a) d'une lame vibrante (4) montée sur une tête de coupe (2) et apte à être mise en vibration selon une direction verticale pour découper une matière souple, le dispositif comprenant :
des moyens de mise en vibration (12) de la lame selon une direction verticale ;
des moyens d'acquisition (20) d'une image numérique de la lame ; et
des moyens de calcul d'une dimension filtrée (d) entre le dos et le fil tranchant de la lame à partir d'un nombre de pixels déterminé sur l'image numérique et compris le long d'une droite (L3) perpendiculaire à une ligne (L1)
correspondant au tranchant de la lame entre la ligne (L1) correspondant au tranchant de la lame et une ligne (L2) correspondant au dos de la lame.

10. Dispositif selon la revendication 9, comprenant en outre des moyens d'éclairage (22) du fil tranchant de la lame.

## Patentansprüche

1. Verfahren zur Bestimmung einer Dimension zwischen dem Rücken und der scharfen Schneide (4a) einer oszillierenden Klinge (4), die an einem Schneidkopf (2) montiert und dazu geeignet ist, gemäß einer vertikalen Richtung in Oszillation versetzt zu werden, um ein elastisches Material zu schneiden, der Reihe nach umfassend:
Erfassen eines digitalen Bildes (24) der Klinge, die an dem Schneidwerkzeug montiert ist, auf solche Weise, dass eine Linie (L1), die einer Schneidkante (4b) der Klinge entspricht, und eine Linie (L2), die einem Rücken (4c) der Klinge entspricht, auf dem Bild zu sehen sind,
Bestimmen, auf dem digitalen Bild entlang einer Geraden (L3) senkrecht zu der Linie, die der Schneidkante der Klinge entspricht, der Anzahl von Pixeln, die zwischen der Linie, die der Schneidkante der Klinge entspricht, und der Linie, die dem Rücken der Klinge entspricht, liegen, und
Berechnen einer gefilterten Dimension (d) zwischen dem Rücken und der scharfen Schneide der Klinge ausgehend von der Anzahl von Pixeln, die zwischen der Linie, die der Schneidkante der Klinge entspricht, und der Linie, die dem Rücken der Klinge entspricht, liegen.

2. Verfahren nach Anspruch 1, wobei der Schritt, der aus dem Aufnehmen eines digitalisierten Bilds der Klinge besteht, erfolgt, während die Klinge mit einer Oszillationsfrequenz in Oszillation versetzt wird, die bis zu der maximalen für die Schneidmaschine zugelassenen Oszillationsfrequenz reichen kann.

3. Verfahren nach Anspruch 2, wobei das Versetzen der Klinge in Oszillation mit einer Oszillationsamplitude erfolgt, die zwischen 0,5 mm und 30 mm liegt.

4. Verfahren nach Anspruch 1, wobei der Schritt, der aus dem Aufnehmen eines digitalisierten Bilds der Klinge besteht, mit der Klinge in einer statischen Position erfolgt.

5. Verfahren nach einem der Ansprüche 1 bis 4, umfassend ferner vor dem Schritt, der aus dem Aufnehmen eines digitalisierten Bilds der Klinge besteht, einen Schritt zur Kalibrierung, der aus dem Aufnehmen eines digitalisierten Bilds einer Kalibrierungsklinge, die an dem Schneidkopf montiert ist, besteht, wobei die Kalibrierungsklinge eine bekannte Dimension zwischen dem Rücken und der scharfen Schneide aufweist.

6. Verfahren nach einem der Ansprüche 1 bis 5, umfassend ferner die Verwendung der Dimension zwischen dem Rücken und der scharfen Schneide der Klinge, um die Daten des Schneidkopfs zu aktualisieren.

7. Verfahren nach einem der Ansprüche 1 bis 6, wobei der Schritt, der aus dem Aufnehmen eines digitalisierten Bilds der Klinge besteht, mithilfe einer Digitalkamera (20) erfolgt, die an dem Schneidkopf mit Sicht auf die Klinge montiert ist.

8. Verfahren nach Anspruch 7, wobei die Kamera einen digitalen Sensor umfasst, der eine Auflösung von 2592 x 1944 Pixel und eine Erfassungsgeschwindigkeit von 15 Bildern pro Sekunde aufweist.

9. Vorrichtung zur Bestimmung einer Dimension der scharfen Schneide (4a) einer oszillierenden Klinge (4), die an einem Schneidkopf (2) montiert und dazu geeignet ist, gemäß einer vertikalen Richtung in Oszillation versetzt zu werden, um ein elastisches Material zu schneiden, wobei die Vorrichtung umfasst:
Mittel (12) zum Versetzen der Klinge in Oszillation gemäß einer vertikalen Richtung,
Mittel (20) zur Erfassung eines digitalen Bildes der Klinge, und
Mittel zur Berechnung einer gefilterten Dimension (d) zwischen dem Rücken und der scharfen Schneide der Klinge ausgehend von einer Anzahl von Pixeln, die auf dem digitalen Bild bestimmt wird und zwischen einer Linie (L1), die der Schneidkante der Klinge entspricht, und einer Linie (L2), die dem Rücken der Klinge entspricht, entlang einer Geraden (L3) liegt, die senkrecht zu der Linie (L1) ist, die der Schneidkante der Klinge entspricht.

10. Vorrichtung nach Anspruch 9, umfassend ferner Mittel (22) zur Beleuchtung der scharfen Schneide der Klinge.

## Claims

1. A method for determining a dimension between the back and the cutting edge (4a) of a vibrating blade (4) mounted on a cutting head (2) and capable of being vibrated in a vertical direction for cutting a flexible material, comprising in succession:
acquiring a digital image (24) of the blade mounted on the cutting tool so that a line (L1) corresponding to a cutting edge (4b) of the blade and a line (L2) corresponding to a back (4c) of the blade are visible in the image;
determining on the digital image along a straight line (L3) perpendicular to the line corresponding to the cutting edge of the blade the number of pixels comprised between the line corresponding to the cutting edge of the blade and the line corresponding to the back of the blade; and
calculating a filtered dimension (d) between the back and the cutting edge of the blade based on the number of pixels comprised between the line corresponding to the cutting edge of the blade and the line corresponding to the back of the blade.

2. The method according to claim 1, wherein the step consisting of taking a digitized image of the blade is accomplished by vibrating the blade at a vibration frequency which can reach the maximum vibration frequency allowed on the cutting machine.

3. The method according to claim 2, wherein the vibration of the blade is accomplished at a vibration amplitude comprised between 0.5 mm and 30 mm.

4. The method according to claim 1, wherein the step consisting of taking a digitized image of the blade is accomplished with the blade in a static position.

5. The method according to any one of claims 1 to 4, also comprising, prior to the step consisting of taking a digitized image of the blade, a calibration step consisting of taking a digitized image of a standard blade mounted on the cutting head, said standard blade having a known dimension between the back and the cutting edge.

6. The method according to any one of claims 1 to 5, also comprising the use of the dimension between the back and the cutting edge of the blade to update the cutting head data.

7. The method according to any one of claims 1 to 6, wherein the step consisting of taking a digitized image of the blade is accomplished by means of a digital camera (20) mounted on the cutting head facing the blade.

8. The method according to claim 7, wherein the camera comprises a digital sensor having a resolution of 2592 by 1944 pixels and an acquisition speed of 15 images per second.

9. A device for determining a dimension of the cutting edge (4a) of a vibrating blade (4) mounted on a cutting head (2) and capable of being vibrated in a vertical direction for cutting a flexible material, the device comprising:
means (12) for vibrating the blade in a vertical direction;
means for acquiring (20) a digital image of the blade; and
means for calculating a filtered dimension (d) between the back and the cutting edge of the blade based on a number of pixels determined on the digital image and comprised along a straight line (L3) perpendicular to a line (L1) corresponding to the cutting edge of the blade between the line (L1) corresponding to the cutting edge of the blade and a line (L2) corresponding to the back of the blade.

10. The device according to claim 9, also comprising means (22) for lighting the cutting edge of the blade.
